(19) Europäisches Patentamt
European Patent Office
Office européen des brevets

(11) **EP 4 485 604 A1**

(12) **EUROPEAN PATENT APPLICATION**
published in accordance with Art. 153(4) EPC

(43) Date of publication:
**01.01.2025 Bulletin 2025/01**

(21) Application number: **23781393.6**

(22) Date of filing: **30.03.2023**

(51) International Patent Classification (IPC):
***H01M 10/0569*** (2010.01)  ***H01M 10/052*** (2010.01)

(52) Cooperative Patent Classification (CPC):
**H01M 10/052; H01M 10/0569; Y02E 60/10**

(86) International application number:
**PCT/KR2023/004266**

(87) International publication number:
**WO 2023/191541 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 KR 20220039950**

(71) Applicant: **LG Energy Solution, Ltd.**
**Seoul 07335 (KR)**

(72) Inventors:
• **LEE, Jung Hoon**
  **Daejeon 34122 (KR)**
• **LEE, Chul Haeng**
  **Daejeon 34122 (KR)**
• **KANG, Yoo Sun**
  **Daejeon 34122 (KR)**
• **PARK, Sol Ji**
  **Daejeon 34122 (KR)**
• **LEE, Jae Won**
  **Daejeon 34122 (KR)**

(74) Representative: **Hoffmann Eitle**
**Patent- und Rechtsanwälte PartmbB**
**Arabellastraße 30**
**81925 München (DE)**

(54) **NONAQUEOUS ELECTROLYTE AND LITHIUM SECONDARY BATTERY COMPRISING SAME**

(57)     The present invention relates to a nonaqueous electrolyte and a lithium secondary battery comprising same, the nonaqueous electrolyte comprising: an organic solvent comprising ethylene carbonate; a non-solvent; and a lithium salt, wherein A, a degree of freedom of ethylene carbonate, represented by formula (1), is less than or equal to 30 %. Formula (1): $A = \{P_{free-EC} / (P_{free-EC} + P_{Coordination-EC})\} \times 100$ In formula 1, A represents a degree of freedom of ethylene carbonate, $P_{free-EC}$ represents an integrated area of a graph obtained by deconvolution of the Raman spectrum of the electrolyte with the Gaussian function on the basis of a $893 cm^{-1}$ peak, and $P_{Coordination-EC}$ represents an integrated area of a graph obtained by deconvolution of the Raman spectrum of the electrolyte with the Gaussian function on the basis of a $903 cm^{-1}$ peak.

[FIG. 1]

**Description**

## TECHNICAL FIELD

This application claims priority from Korean Patent Application No. 10-2022-0039950, filed on March 30, 2022, the disclosure of which is incorporated by reference herein.

The present invention relates to a non-aqueous electrolyte and a lithium secondary battery including the same, and more particularly, to a non-aqueous electrolyte capable of suppressing a cell volume change during lithium secondary battery operation and a lithium secondary battery including the same.

## BACKGROUND ART

Recently, interests in energy storage technologies have been increasingly grown, and efforts for research and development of electrochemical devices have been gradually materialized as the application of the energy storage technologies is expanded to power sources of mobile phones, camcorders, notebook PCs, and even to electric vehicles.

There emerges an interest in the development of rechargeable secondary batteries among these electrochemical devices, and, particularly, lithium secondary batteries developed in the early 1990's are spotlighted because the lithium secondary batteries are advantageous in that they have higher operating voltage and significantly higher energy density.

A lithium secondary battery is generally prepared by a method of forming an electrode assembly by disposing a separator between a positive electrode including a positive electrode active material formed of a transition metal oxide containing lithium and a negative electrode including a negative electrode active material capable of storing lithium ions, and, after the electrode assembly is inserted into a battery case, injecting a non-aqueous electrolyte that becomes a medium for transporting lithium ions and then sealing the battery case. The non-aqueous electrolyte is generally composed of a lithium salt and an organic solvent capable of dissolving the lithium salt.

Carbonate solvents are mainly used as the organic solvent of the non-aqueous electrolyte, and, among them, ethylene carbonate is a solvent continuously used to dissociate the lithium salt with high permittivity. However, the ethylene carbonate is decomposed by a reaction with $O_2$ radicals generated at the positive electrode under high-voltage and high-temperature conditions, and generates $CO_2$ gas as a decomposition product. Recently, lithium secondary batteries operated at a high voltage are being developed as the demand for a secondary battery having high energy density, such as a battery for an electric vehicle, increases, wherein the gas generation due to the decomposition of the ethylene carbonate during the operation of these high-voltage lithium secondary batteries may cause a serious problem in safety of a cell.

Thus, there is a need to develop a non-aqueous electrolyte in which safety of the lithium secondary battery may be improved by minimizing the gas generation by suppressing the decomposition of the ethylene carbonate.

## DISCLOSURE OF THE INVENTION

### TECHNICAL PROBLEM

An aspect of the present invention provides a non-aqueous electrolyte, which may suppress a volume change during cell operation due to a small $CO_2$ gas generation amount by adjusting a degree of freedom of ethylene carbonate in the electrolyte to satisfy a specific range, and a lithium secondary battery including the same.

### TECHNICAL SOLUTION

According to an embodiment, the present invention provides a non-aqueous electrolyte including an organic solvent containing ethylene carbonate, a non-solvent, and a lithium salt, wherein a degree of freedom A of the ethylene carbonate, which is represented by Equation (1), is 30% or less, preferably 10% to 30%, and more preferably 20% to 30%.

$$\text{Equation (1): } A = \{P_{\text{free-EC}}/(P_{\text{free-EC}} + P_{\text{Coordination-EC}})\} \times 100$$

In Equation (1), A is the degree of freedom of the ethylene carbonate, $P_{\text{free-EC}}$ is an integrated area of a graph which is obtained by deconvolution of a Raman spectrum of the electrolyte with a Gaussian function based on a peak at 893 $cm^{-1}$, and $P_{\text{Coordination-EC}}$ is an integrated area of a graph which is obtained by deconvolution of the Raman spectrum of the electrolyte with a Gaussian function based on a peak at 903 $cm^{-1}$.

In the non-aqueous electrolyte, a ratio of a volume of the non-solvent to a volume of the ethylene carbonate may be in a range of 1 to 6, preferably 1 to 5, and more preferably 1 to 4.

Specifically, the ethylene carbonate may be included in an amount of 1 vol% to 10 vol%, preferably 3 vol% to 10 vol%, and more preferably 5 vol% to 10 vol% based on a total volume of the non-aqueous electrolyte, and the non-solvent may be included in an amount of 10 vol% to 40 vol%, preferably, 10 vol% to 30 vol% based on the total volume of the non-aqueous electrolyte.

The non-solvent, for example, may be at least one selected from the group consisting of fluorobenzene, difluorobenzene, hexafluorobenzene, 1,1,2,2-tetrafluoroethyl-2,2,3,3-tetrafluoropropyl ether (HFE), and bis(2,2,2-trifluoroethyl)ether (BTFE).

The lithium salt may be included in a concentration of 1.3 M to 2 M, preferably 1.3 M to 1.8 M, and more preferably 1.3 M to 1.7 M.

The organic solvent may further include a linear carbonate solvent, and the linear carbonate solvent may be included in an amount of 50 vol% to 85 vol%, preferably 50 vol% to 80 vol%, and more preferably 60 vol% to 80 vol% based on the total volume of the non-aqueous electrolyte.

According to another embodiment, the present invention provides a lithium secondary battery including the non-aqueous electrolyte according to the present invention.

## ADVANTAGEOUS EFFECTS

Since a non-aqueous electrolyte according to the present invention replaces a portion of ethylene carbonate with a non-solvent that does not participate in lithium dissociation in the electrolyte, an amount of free-ethylene carbonate that is not coordinated with lithium ions and an amount of the ethylene carbonate in the electrolyte may be reduced. Specifically, in the non-aqueous electrolyte according to the present invention, a degree of freedom A of ethylene carbonate, which is represented by Formula (1), is 30% or less, and, when the degree of freedom A of the ethylene carbonate satisfies the above range, an effect of significantly reducing $CO_2$ gas generation is obtained.

If the amount of the ethylene carbonate in the non-aqueous electrolyte is high, the ethylene carbonate causes $CO_2$ generation while being oxidatively decomposed at a positive electrode during charge and discharge, and, as a result, it adversely affects battery safety. If a ratio of the ethylene carbonate in an organic solvent is reduced, the $CO_2$ generation due to the decomposition of the ethylene carbonate may be reduced, but, since an amount of gas, such as $CH_4$, generated is increased due to decomposition of linear carbonates, such as ethylmethyl carbonate and dimethyl carbonate, which are increased instead of the ethylene carbonate, an effect of reducing a gas generation amount is insignificant.

If the ethylene carbonate in the non-aqueous electrolyte forms a coordination bond with lithium ions, oxidation stability is increased to suppress the oxidative decomposition of the ethylene carbonate, but the ethylene carbonate, which is not bonded with the lithium ions, is oxidatively decomposed at the positive electrode to generate $CO_2$ gas. That is, an amount of the gas generated by the decomposition of the ethylene carbonate is greatly affected by the amount of the free-ethylene carbonate. In a case in which a concentration of a lithium salt is increased, a ratio of the free-ethylene carbonate may be decreased, but, since viscosity of an electrolyte solution is increased and conductivity is decreased as the concentration of the lithium salt is increased, there is a problem in that life characteristics of a lithium secondary battery are degraded.

Thus, in the present invention, since the non-solvent, which does not participate in lithium dissociation in the electrolyte, is used in combination instead of reducing the amount of the ethylene carbonate, the amount of the free-ethylene carbonate that is not coordinated with lithium ions and the amount of the ethylene carbonate in the electrolyte are reduced together without increasing an amount of the linear carbonate or the concentration of the lithium salt, and thus, the $CO_2$ gas generation may be effectively reduced and the degradation of the life characteristics may be minimized.

In general, since the non-solvent has lower viscosity characteristics than the ethylene carbonate, an effect of reducing viscosity of the electrolyte may also be obtained when the non-solvent is used in combination as in the present invention.

If the non-aqueous electrolyte according to the present invention is used, electrolyte depletion and gas generation during operation of the lithium secondary battery may be effectively prevented, and, accordingly, a lithium secondary battery having excellent life characteristics and safety may be achieved.

## BRIEF DESCRIPTION OF THE DRAWINGS

FIG. 1 is a graph illustrating a Raman spectrum of a non-aqueous electrolyte of Example 1.
FIG. 2 is a graph illustrating life characteristics of lithium secondary batteries in which non-aqueous electrolytes of Examples 1 to 3 and Comparative Examples 1 to 5 are used.

## MODE FOR CARRYING OUT THE INVENTION

Hereinafter, the present invention will be described in more detail.

**Non-aqueous Electrolyte**

A non-aqueous electrolyte according to the present invention includes (1) an organic solvent containing ethylene carbonate, (2) a non-solvent, and (3) a lithium salt, wherein a degree of freedom A of the ethylene carbonate, which is represented by Equation (1) below,is 30% or less, preferably 10% to 30%, and more preferably 20% to 30%.

$$\text{Equation (1): } A = \{P_{free\text{-}EC}/(P_{free\text{-}EC} + P_{Coordination\text{-}EC})\}\times 100$$

In Equation (1), A is the degree of freedom of the ethylene carbonate, $P_{free\text{-}EC}$ is an integrated area of a graph which is obtained by deconvolution of a Raman spectrum of the electrolyte with a Gaussian function based on a peak at 893 $cm^{-1}$, and $P_{Coordination\text{-}EC}$ is an integrated area of a graph which is obtained by deconvolution of the Raman spectrum of the electrolyte with a Gaussian function based on a peak at 903 $cm^{-1}$.

The degree of freedom (A) of the ethylene carbonate is a value representing a ratio of free-ethylene carbonate that is not coordinated with lithium ions to the total ethylene carbonate in the electrolyte. The peak $P_{free\text{-}EC}$ appearing near 893 $cm^{-1}$ in Raman spectrum analysis is a peak caused by the free-ethylene carbonate that is not bonded with lithium ions, and the peak $P_{Coordination\text{-}EC}$ appearing near 903 $cm^{-1}$ is a peak caused by the ethylene carbonate coordinated with lithium ions. The integrated area of each peak corresponds to an amount of a component representing the peak. Thus, $P_{free\text{-}EC}/(P_{free\text{-}EC} + P_{Coordination\text{-}EC})$ in Equation (1) is a value corresponding to the ratio of the free-ethylene carbonate to the total ethylene carbonate present in the electrolyte.

If the ethylene carbonate forms a coordination bond with the lithium ions, oxidation stability is increased to suppress oxidative decomposition of the ethylene carbonate, and the ethylene carbonate, which is not bonded with the lithium ions, is oxidatively decomposed at a positive electrode to generate $CO_2$ gas. That is, an amount of the gas generated by the decomposition of the ethylene carbonate is greatly affected by the ratio of the free-ethylene carbonate. According to the study of the present inventors, in a case in which the ratio of the free-ethylene carbonate to the total ethylene carbonate in the electrolyte is 30% or less, that is, in a case in which the degree of freedom A of the ethylene carbonate, which is represented by Equation (1), is 30% or less, it has been found that an effect of significant reducing an amount of the $CO_2$ gas generated and minimizing degradation of life characteristics is obtained. In a case in which the degree of freedom A of the ethylene carbonate, which is represented by Equation (1),is greater than 30%, since the $CO_2$ reduction effect is reduced, a volume change may occur during cell operation and the life characteristics may be significantly degraded.

Preferably, the degree of freedom A of the ethylene carbonate, which is represented by Equation (1), may be in a range of 10% to 30%, more preferably, 20% to 30%. The smaller the degree of freedom A of the ethylene carbonate is, the more advantageous it is to reduce the gas generation amount as the decomposition of the ethylene carbonate is suppressed, but, in a case in which an amount of the ethylene carbonate is reduced or an amount of the lithium salt is increased in order to reduce the degree of freedom A, a problem may occur in which cell performance is degraded due to insufficient formation of a solid electrolyte interphase (SEI) film of a negative electrode, an increase in electrolyte viscosity, and a decrease in ionic conductivity.

The degree of freedom A of the ethylene carbonate, which is represented by Equation (1), may be adjusted by adjusting a concentration of the lithium salt and a composition of the solvent in the non-aqueous electrolyte.

Hereinafter, each component of the non-aqueous electrolyte according to the present invention will be described in more detail.

**(1) Organic Solvent**

In the present invention, the organic solvent includes ethylene carbonate.

Ethylene carbonate may well dissociate a lithium salt in an electrolyte solution due to high permittivity. Thus, in a case in which the ethylene carbonate is used as the organic solvent, excellent electrochemical performance may be achieved due to excellent lithium mobility.

In the present invention, the ethylene carbonate may be included in an amount of 10 vol% or less, preferably 1 vol% to 10 vol%, more preferably 3 vol% to 10 vol%, and even more preferably 5 vol% to 10 vol% based on a total volume of the non-aqueous electrolyte. When the amount of the ethylene carbonate satisfies the above range, it is easy to adjust the A value of Equation (1) to 30% or less, and a non-aqueous electrolyte solution with high lithium ion conductivity and a low gas generation amount may be prepared. Specifically, if the amount of the ethylene carbonate is excessively small, the lithium ion conductivity may be reduced to deteriorate electrochemical properties, and, if the amount of the ethylene carbonate is excessively large, the ratio of the free-ethylene carbonate may be increased to increase agas generation amount.

The organic solvent may further include a linear carbonate-based solvent in addition to the ethylene carbonate. The linear carbonate-based solvent is an organic solvent having low viscosity and low permittivity, wherein, for example, the linear carbonate-based solvent may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate.

The linear carbonate solvent may be included in an amount of 50 vol% to 85 vol%, preferably 50 vol% to 80 vol%, and more preferably 60 vol% to 80 vol% based on the total volume of the non-aqueous electrolyte. When the amount of the linear carbonate-based solvent satisfies the above range, the viscosity of the non-aqueous electrolyte may be appropriately maintained, and an effect of reducing gas generation is excellent.If the amount of the linear carbonate-based solvent is excessively small, the viscosity of the non-aqueous electrolyte may be increased to reduce the ionic conductivity, and, if the amount of the linear carbonate-based solvent is excessively large, since an excessive amount of gas, such as $CH_4$, is generated while the linear carbonate-based solvent is decomposed during battery operation, an effect of suppressing gas generation may be reduced.

Although not essential, the organic solvent may further include a cyclic carbonate-based solvent other than the ethylene carbonate or a linear ester-based solvent, if necessary.

As the cyclic carbonate-based solvent other than the ethylene carbonate, for example, at least one selected from the group consisting of propylene carbonate (PC), 1,2-butylene carbonate, 2,3-butylene carbonate, 1,2-pentylene carbonate, 2,3-pentylene carbonate, and vinylene carbonate may be used, and, as the linear ester-based solvent, for example, at least one selected from the group consisting of methyl acetate, ethyl acetate, propyl acetate, methyl propionate, ethyl propionate, propyl propionate, and butyl propionate may be used.

**(2)Non-solvent**

A non-solvent is a solvent that does not participate in dissociation of a lithium salt due to its low solubility in the lithium salt. In the present invention, since the non-solvent, which does not participate in lithium dissociation in the electrolyte, is used in combination instead of reducing the amount of the ethylene carbonate, the amount of the free-ethylene carbonate in the electrolyte is reduced together without increasing the concentration of the lithium salt. If an amount of a solvent, such as linear carbonate that forms a coordination bond with lithium ions, is increased even if the amount of the ethylene carbonate is reduced, since a bond between the increased linear carbonate and the lithium ions is increased, there is a limitation in increasing a ratio of the ethylene carbonate that is coordinated with the lithium ions. Thus, a decrease in the ratio of the free-ethylene carbonate to the total ethylene carbonate is limited. However, since the non-solvent is not bonded with the lithium ions, it does not affect a degree of dissociation of the ethylene carbonate, and thus, in a case in which the non-solvent is added by an amount of the reduced amount of the ethylene carbonate, the ratio of the free-ethylene carbonate to the total ethylene carbonate may be effectively reduced.

As the non-solvent, for example, at least one selected from the group consisting of fluorobenzene, difluorobenzene, hexafluorobenzene, 1,1,2,2-tetrafluoroethyl-2,2,3,3-tetrafluoropropyl ether (HFE), and bis(2,2,2-trifluoroethyl)ether (BTFE) may be used, and, among them, fluorobenzene is particularly preferable. With respect to the fluorobenzene, since it has lower viscosity characteristics than the ethylene carbonate, an effect of reducing the viscosity of the electrolyte may be obtained when the fluorobenzene is used as the non-solvent, and the fluorobenzene is electrochemically stable because there is no oxidation/reduction reaction at 2.5 V to 4.3V, an operating potential of a secondary battery.

The non-solvent may be included in an amount of 10 vol% to 40 vol%, preferably,10 vol% to 30 vol% based on the total volume of the non-aqueous electrolyte. When the amount of the non-solvent satisfies the above range, the amount of the $CO_2$ generated is significantly reduced, and the effect of reducing the viscosity of the non-aqueous electrolyte is excellent.

In the non-aqueous electrolyte according to the present invention, a ratio of a volume of the non-solvent to a volume of the ethylene carbonate may be in a range of 1 to 6, preferably 1 to 5, and more preferably 1 to 4. In a case in which the volume ratio of the non-solvent to the ethylene carbonate satisfies the above range, the effect of reducing the gas generation amount and the effect of reducing the viscosity of the non-aqueous electrolyte are excellent. In a case in which the non-solvent is included in a volume smaller than that of the ethylene carbonate, the effect of suppressing gas generation is insignificant, and, if the volume of the non-solvent is excessively higher than that of the ethylene carbonate, the lithium ion conductivity may be reduced to deteriorate the electrochemical properties.

**(3) Lithium Salt**

Various lithium saltstypically used in an electrolyte solution for a lithium secondary battery may be used as the lithium salt used in the present invention without limitation. For example, the lithium salt may include Li$^+$ as a cation, and may include at least one selected from the group consisting of F$^-$, Cl$^-$, Br$^-$, I$^-$, NO$_3^-$, N(CN)$_2^-$, BF$_4^-$, ClO$_4^-$, AlO$_4^-$, AlCl$_4^-$, PF$_6^-$, SbF$_6^-$, AsF$_6^-$, B$_{10}$Cl$_{10}^-$, BF$_2$C$_2$O$_4^-$, BC$_4$O$_8^-$, PF$_4$C$_2$O$_4^-$, PF$_2$C$_4$O$_8^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, C$_4$F$_9$SO$_3^-$, CF$_3$CF$_2$SO$_3^-$, (FSO$_2$)$_2$N$^-$, CF$_3$CF$_2$(CF$_3$)$_2$CO$^-$, (CF$_3$SO$_2$)$_2$CH$^-$, CH$_3$SO$_3^-$, CF$_3$(CF$_2$)$_7$SO$_3^-$, CF$_3$CO$_2^-$, CH$_3$CO$_2^-$, SCN-, and (CF$_3$CF$_2$SO$_2$)$_2$N$^-$ as an anion.

Specifically, the lithium salt may include at least one selected from the group consisting of LiCl, LiBr, LiI, LiBF$_4$, LiClO$_4$, LiAlO$_4$, LiAlCl$_4$, LiPF$_6$, LiSbF$_6$, LiAsF$_6$, LiB$_{10}$Cl$_{10}$, LiBOB (LiB(C$_2$O$_4$)$_2$), LiCF$_3$SO$_3$, LiFSI (LiN(SO$_2$F)$_2$), LiCH$_3$SO$_3$, LiCF$_3$CO$_2$, LiCH$_3$CO$_2$, and LiBETI (LiN(SO$_2$CF$_2$CF$_3$)$_2$). Specifically, the lithium salt may include a single material selected from the group consisting of LiBF$_4$, LiClO$_4$, LiPF$_6$, LiBOB (LiB (C$_2$O$_4$)$_2$), LiCF$_3$SO$_3$, LiTFSI (LiN(SO$_2$CF$_3$)$_2$),LiFSI (LiN(SO$_2$F)$_2$), and LiBETI (LiN(SO$_2$CF$_2$CF$_3$)$_2$, or a mixture of two or more thereof.

The lithium salt may be included in a concentration of 1.3 M to 2 M, preferably 1.3 M to 1.8 M, and more preferably 1.3 M to 1.7 M in the non-aqueous electrolyte. In a case in which the concentration of the lithium salt is less than 1.3 M, since an amount of the lithium ions, which may be coordinated with the ethylene carbonate, is small, it is difficult to reduce the ratio of the free-ethylene carbonate to a desired level, and thus, the reduction in the amount of the CO$_2$ generated is limited and lithium mobility in the electrolyte may be reduced to degrade the life characteristics.

Since the non-aqueous electrolyte of the present invention includes the non-solvent having a low degree of dissociation of the lithium salt, the lithium salt may not be completely dissociated when the concentration of the lithium salt is greater than 2M and the electrolyte viscosity may be increased to reduce the ionic conductivity.

### (4) Other Components

Although not essential, the non-aqueous electrolyte according to the present invention may further include additives in addition to the above components, in order to further improve physical properties of the secondary battery.

Examples of the additives may be at least one selected from the group consisting of a cyclic carbonate-based compound, a halogen-substituted carbonate-based compound, a sultone-based compound, a sulfate-based compound, a phosphate-based compound, a borate-based compound, an amine-based compound, a silane-based compound, and a lithium salt-based compound.

The cyclic carbonate-based compound, for example, may be vinylene carbonate (VC) or vinyl ethylene carbonate (VEC).

The halogen-substituted carbonate-based compound, for example,may be fluoroethylene carbonate (FEC).

The sultone-based compound, for example, may be 1,3-propane sultone or 1,3-propene sultone.

The sulfate-based compound, for example, may be ethylene sulfate (Esa), trimethylene sulfate (TMS), or methyl trimethylene sulfate (MTMS).

The phosphate-based compound, for example, may be at least one compound selected from the group consisting of lithium difluorobis(oxalato)phosphate, lithium difluorophosphate,tetramethyl trimethylsilyl phosphate,trimethylsilyl phosphite, tris(2,2,2-trifluoroethyl)phosphate, and tris(trifluoroethyl)phosphite.

The borate-based compound, for example, may betetraphenylborate or lithium oxalyldifluoroborate (LiODFB).

The amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may be at least one compound selected from the group consisting of LiPO$_2$F$_2$, LiODFB, LiBOB(lithium bis(oxalato)borate (LiB(C$_2$O$_4$)$_2$)), and LiBF$_4$.

The above additives may be used alone, or two or more thereof may be mixed and used.

A total amount of the additives may be in a range of 0.1 wt% to 20 wt%, preferably, 0.1 wt% to 15 wt% based on a total weight of the electrolyte solution. In a case in which the additive is included in an amount within the above range, occurrence of a side reaction during an initial activation process of the secondary battery or residue or precipitation of the additive may be prevented while a film may be stably formed on the electrode and an ignition phenomenon during overcharge may be suppressed.

### Lithium Secondary Battery

Next, a lithium secondary battery according to the present invention will be described.

The lithium secondary battery according to the present invention includes the above-described non-aqueous electrolyte according to the present invention. Specifically, the lithium secondary battery according to the present invention includes a positive electrode, a negative electrode, a separator disposed between the positive electrode and the negative electrode, and a non-aqueous electrolyte, and, in this case, the non-aqueous electrolyte is the above-described non-aqueous electrolyte according to the present invention. Since the non-aqueous electrolyte has been described above, a description thereof will be omitted and other components will be described below.

**Positive Electrode**

The positive electrode may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein various positive electrode active materials used in the art, for example, lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-z}Ni_zO_4$ (where $0<Z<2$)), lithium-nickel-cobalt-based oxide (e.g., $LiNi_{1-Y1}Co_{Y1}O_2$ (where $0<Y1<1$)), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$)), lithium-nickel-manganese-cobalt-based oxide (e.g., $Li(Ni_{p1}Co_{q1}Mn_{r1})O_2$ (where $0<p1<1$, $0<q1<1$, $0<r1<1$, and $p1+q1+r1=1$) or $Li(Ni_{p2}Co_{q2}Mn_{r2})O_4$ (where $0<p2<2$, $0<q2<2$, $0<r2<2$, and $p2+q2+r2=2$), or lithium-nickel-cobalt-transition metal (M) oxide (e.g., $Li(Ni_{p3}Co_{q3}Mn_{r3}M_{S3})O_2$ (where M is selected from the group consisting of aluminum (Al), iron (Fe), vanadium (V), chromium (Cr), titanium (Ti), tantalum (Ta), magnesium (Mg), and molybdenum (Mo), and p3, q3, r3, and S3 are atomic fractions of each independent elements, wherein $0<p3<1$, $0<q3<1$, $0<r3<1$, $0<S3<1$, and $p2+q2+r3+S2=1$)may be used.

Preferably, the positive electrode active material may include at least one of a lithium manganese-based oxide represented by the following [Formula 1] and a lithium nickel-based oxide represented by [Formula 2].

$$\text{[Formula 1]} \qquad Li_{1+x}[Ni_aCo_bMn_cM^1_d]_{1-x}O_{2-y}$$

In Formula 1, $0.05 \leq x \leq 1$, $0 \leq a \leq 0.5$, $0 \leq b \leq 0.1$, $0.5 \leq c \leq 1.0$, $0 \leq d \leq 0.2$, and $-1.0 \leq y \leq 1.0$. $M^1$ may be at least one metal ion selected from the group consisting of Al, boron (B), cobalt (Co), tungsten (W), Mg, V, Ti, zinc (Zn), gallium (Ga), indium (In), ruthenium (Ru), niobium (Nb), tin (Sn), strontium (Sr), and zirconium (Zr).

$$\text{[Formula 2]} \qquad Li_{1+x1}[Ni_{a1}Co_{b1}Mn_{c1}M^2_{d1}]O_2$$

In Formula 2, $-0.2 \leq x1 \leq 0.2$, $0.8 \leq a1 < 1$, $0 < b1 < 0.2$, $0 < c1 < 0.2$, and $0 \leq d1 \leq 0.2$. $M^2$ may be at least one selected from the group consisting of Al, B, Co, W, Mg, V, Ti, Zn, Ga, In, Ru, Nb, Sn, Sr, and Zr.

A secondary battery, in which the lithium manganese-based oxide represented by [Formula 1] is used, undergoes an activation process at a high voltage of 4.6 V or higher, wherein there has been a problem in that an excessive amount of $CO_2$ is generated because ethylene carbonate is oxidatively decomposed at the positive electrode during this process. Also, since the lithium nickel-based oxide represented by Formula 2 contains a high amount of nickel, it is structurally unstable and there has been a problem in that an excessive amount of $CO_2$ is generated because ethylene carbonate is oxidatively decomposed at the positive electrode when operated at a high temperature or high voltage. However, since the non-aqueous electrolyte of the present invention has the ratio of the free-ethylene carbonate, which is oxidatively decomposed at the positive electrode, as low as 30% or less, the $CO_2$ generation may be effectively reduced when the non-aqueous electrolyte of the present invention is used together with the positive electrode active materials of [Formula 1] and/or [Formula 2].

The positive electrode active material may be included in an amount of 80 wt% to 99.9 wt%, preferably, 85 wt% to 99 wt% based on a total weight of the positive electrode active material layer.

Next, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 10 wt%, preferably, 0.1 wt% to 5 wt% based on the total weight of the positive electrode active material layer.

Next, the binder improves the adhesion between positive electrode active material particles and the adhesion between the positive electrode active material and a current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 0.1 wt% to 15 wt%, preferably, 0.1 wt% to 10 wt% based on the total weight of the positive electrode active material layer.

The positive electrode of the present invention as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled, or a method in which the positive electrode slurry is cast on a separate support, and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500pm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the positive electrode material mixture may be adjusted to have an appropriate viscosity in consideration of a coating thickness of the positive electrode material mixture, manufacturing yield, and workability, and is not particularly limited.

**Negative Electrode**

Next, a negative electrodewill be described.

The negative electrode according to the present invention includes a negative electrode active material layer including a negative electrode active material, and the negative electrode active material layer may further include a conductive agent and/or a binder, if necessary.

As the negative electrode active material, various negative electrode active materials used in the art, for example, a carbon-based negative electrode active material, a silicon-based negative electrode active material, or a metal alloy may be used.

As the carbon-based negative electrode active material, various carbon-based negative electrode active materials used in the art, for example, graphite-based materials such as natural graphite, artificial graphite, and Kish graphite; pyrolytic carbon, mesophase pitch based carbon fiber, mesocarbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

The silicon-based negative electrode active material may include at least one selected from the group consisting of metallic silicon (Si), silicon oxide ($SiO_x$, where $0<x<2$), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, calcium (Ca), Sr, barium (Ba), radium (Ra), scandium (Sc), yttrium (Y), Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, lead (Pb), Ru, osmium (Os), hassium (Hs), rhodium (Rh), iridium (Ir), palladium (Pd), platinum (Pt), copper (Cu), silver (Ag), gold (Au), Zn, cadmium (Cd), B, Al, Ga, Sn, In, germanium (Ge), phosphorus (P), arsenic (As), antimony (Sb), bismuth (Bi), sulfur (S), selenium (Se), tellurium (Te), polonium (Po), and a combination thereof.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

Next, the conductive agent is a component for further improving conductivity of the negative electrode active material, wherein the conductive agent may be added in an amount of 10 wt% or less, for example, 5 wt% or less based on the total weight of the negative electrode active material layer. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, and various copolymers thereof.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried, or may be prepared by casting the negativeelectrode slurry on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

**Separator**

Next, a separator will be described.

The separator separates the positive electrode and the negative electrode and provides a movement path of lithium ions by being disposed between the negative electrode and the positive electrode, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present invention as described above may be suitably used in portable devices, such as mobile phones, notebook computers, and digital cameras, and electric vehicles.

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in more detail, according to specific examples.

**Example 1**

Ethylene carbonate (EC):ethyl methyl carbonate (EMC):dimethyl carbonate (DMC):fluorobenzene (FB) were mixed in a volume ratio of 10:5:75:10, and a non-aqueous electrolyte was prepared by dissolving $LiPF_6$ therein such that a concentration of the $LiPF_6$ was 1.4 M.

### Example 2

Ethylene carbonate (EC):ethyl methyl carbonate (EMC):dimethyl carbonate (DMC):fluorobenzene (FB) were mixed in a volume ratio of 5:5:75:15, and a non-aqueous electrolyte was prepared by dissolving $LiPF_6$ therein such that a concentration of the $LiPF_6$ was 1.4 M.

### Example 3

Ethylene carbonate (EC):ethyl methyl carbonate (EMC):dimethyl carbonate (DMC):fluorobenzene (FB) were mixed in a volume ratio of 10:5:75:10, and a non-aqueous electrolyte was prepared by dissolving $LiPF_6$ therein such that a concentration of the $LiPF_6$ was 1.6 M.

### Comparative Example 1

Ethylene carbonate (EC):ethyl methyl carbonate (EMC):dimethyl carbonate (DMC) were mixed in a volume ratio of 20:5:75, and a non-aqueous electrolyte was prepared by dissolving $LiPF_6$ therein such that a concentration of the $LiPF_6$ was 1.4 M.

### Comparative Example 2

Ethylene carbonate (EC):ethyl methyl carbonate (EMC):dimethyl carbonate (DMC):fluorobenzene (FB) were mixed in a volume ratio of 15:5:75:5, and a non-aqueous electrolyte was prepared by dissolving $LiPF_6$ therein such that a concentration of the $LiPF_6$ was 1.4 M.

### Comparative Example 3

Ethylene carbonate (EC):ethyl methyl carbonate (EMC):dimethyl carbonate (DMC) were mixed in a volume ratio of 10:5:85, and a non-aqueous electrolyte was prepared by dissolving $LiPF_6$ therein such that a concentration of the $LiPF_6$ was 1.4 M.

### Comparative Example 4

Ethyl methyl carbonate (EMC):dimethyl carbonate (DMC) were mixed in a volume ratio of 5:95, and a non-aqueous electrolyte was prepared by dissolving $LiPF_6$ therein such that a concentration of the $LiPF_6$ was 1.4 M.

### Comparative Example 5

Ethylene carbonate (EC):ethyl methyl carbonate (EMC):dimethyl carbonate (DMC):fluorobenzene (FB) were mixed in a volume ratio of 10:5:75:10, and a non-aqueous electrolyte was prepared by dissolving $LiPF_6$ therein such that a concentration of the $LiPF_6$ was 1.2 M.

[Table 1]

| | Lithium salt concentra tion (M) | Organic solvent (vol%) | | | Non-solvent (vol%) |
| --- | --- | --- | --- | --- | --- |
| | | EC | EMC | DMC | FB |
| Example 1 | 1.4 | 10 | 5 | 75 | 10 |
| Example 2 | 1.4 | 5 | 5 | 75 | 15 |
| Example 3 | 1.6 | 10 | 5 | 75 | 10 |
| Comparative Example1 | 1.4 | 20 | 5 | 75 | 0 |
| Comparative Example2 | 1.4 | 15 | 5 | 75 | 5 |
| Comparative Examples | 1.4 | 10 | 5 | 85 | 0 |
| Comparative Example4 | 1.4 | 0 | 5 | 95 | 0 |
| Comparative Example 5 | 1.2 | 10 | 5 | 75 | 10 |

**Experimental Example 1**

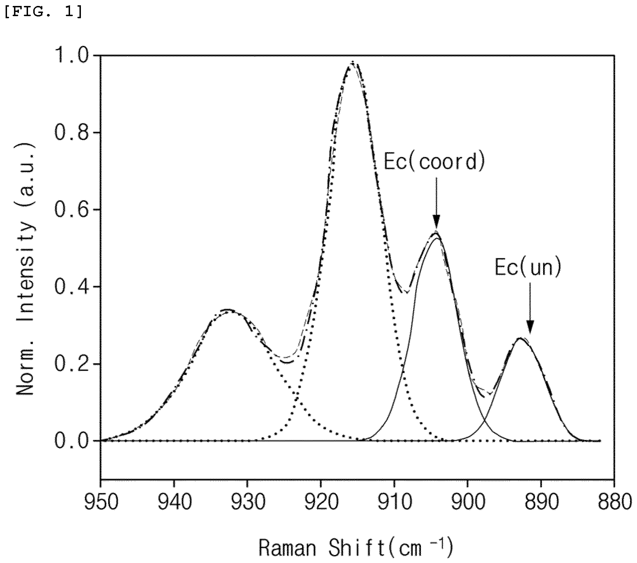

Raman spectra of the non-aqueous electrolytes prepared by Examples 1 to 3 and Comparative Examples 1 to 5 were measured using a Raman spectrometer (ThermoFisher Scientific Inc., Model name: DXR3Xi), and a degree of freedom A of ethylene carbonate according to Equation (1) was calculated using the Raman spectra. Measurement results are presented in Table 2 below. Also, the Raman spectrum of the non-aqueous electrolyte of Example 1 was illustrated in FIG. 1.

**Experimental Example 2**

Viscosities (unit: cps) of the non-aqueous electrolytes prepared by Examples 1 to 3 and Comparative Examples 1 to 5 were measured at 25°C and 250 rpm using a viscometer (BrookField, Model name: DV-3 ULTRA), and a viscosity increase rate based on the viscosity of the non-aqueous electrolyte of Comparative Example 1 was calculated and presented in Table 2 below. The viscosity increase rate was calculated through the following Equation (2).

Viscosity increase rate (%) = {(measured viscosity of the non-aqueous electrolyte - viscosity of the non-aqueous electrolyte of Comparative Example 1)/viscosity of the non-aqueous electrolyte of Comparative Example 1} $\times$ 100          Equation (2) :

<Lithium Secondary Battery Preparation>

(Positive Electrode Preparation)

$LiNi_{0.8}Co_{0.1}Mn_{0.1}O_2$ as a positive electrode active material, carbon blackas a conductive agent, and polyvinylidene fluoride (PVDF), as a binder, were added in a weight ratio of 98:1:1 to N-methyl-2-pyrrolidone (NMP), as a solvent, to prepare a positive electrode slurry. A positive electrode collector(aluminum (Al)thin film) was coated with the positive electrode slurry, dried, and then roll-pressed to prepare apositive electrode.

(Negative ElectrodePreparation)

Graphite as a negative electrode active material, PVDF as a binder, and carbon black, as a conductive agent, were added to NMP, as a solvent, in a weight ratio of 96:1:3 to prepare a negative electrode slurry. A negative electrode collector (copper (Cu) thin film) was coated with the negative electrode slurry, dried, and then roll-pressed to prepare a negative electrode.

(Secondary Battery Preparation)

After an electrode assembly was prepared by a conventional method of sequentially stacking the positive electrode and the negative electrode, which were prepared by the above-described methods, together with a polyethylene porous film, the electrode assembly was accommodated in a pouch-type secondary battery case, and the non-aqueous electrolytes prepared by Examples 1 to 3 and Comparative Examples 1 to 5 were respectively injected to prepare lithium secondary batteries.

**Experimental Example 3**

After each of the above-prepared lithium secondary batteries was fully charged and then stored at 72°C for 30 days, a pin hole was made in the battery case, generated gas was collected for 1 minute under negative pressure, and a $CO_2$ generation amount (unit: $\mu L$) and a $CH_4$ generation amount (unit: $\mu L$) were then measured through chromatography. Then, a gas generation amount increase rate based on Comparative Example 1 was calculated through Equation (3) and presented in Table 2 below.

Gas generation amount increase rate (%) = {(measured gas generation amount - gas generation amount of Comparative Example 1)/gas generation amount of Comparative Example 1} $\times$ 100          Equation (3) :

[Table 2]

| | Free-EC A (%) | Viscosity increase rate (%) | CO$_2$ gas generation amount increase rate (%) | CH$_4$ gas generation amount increase rate (%) |
|---|---|---|---|---|
| Example 1 | 25 | -11.5 | -36.5 | 12.2 |
| Example 2 | 21.4 | -36.9 | -61.6 | 17.8 |
| Example 3 | 25 | -9.1 | -47.8 | 5.2 |
| Comparative Example1 | 40 | 0 | 0 | 0 |
| Comparative Example2 | 32.2 | -1.1 | -10.3 | 2.6 |
| Comparative Examples | 26 | -9.4 | -33.8 | 56.2 |
| Comparative Example4 | 0 | -23.8 | 1.8 | 188.9 |
| Comparative Example 5 | 32 | -28.9 | -33.1 | -2.0 |

Referring to Table 2, it may be confirmed that CO$_2$ gas generation amounts of the non-aqueous electrolytes of Examples 1 to 3,in which the non-solvent was included and the degree of freedom A of the ethylene carbonate was 30% or less, were lower than those of the non-aqueous electrolytes of Comparative Examples 1 to 5.

With respect to the non-aqueous electrolyte of Comparative Example 3 in which the non-solvent was not used and the degree of freedom A of the ethylene carbonate was adjusted to 30% or less by increasing the amount of the linear carbonate, an amount of CO$_2$ reduction was lower than those of the non-aqueous electrolytes of Examples 1 to 3, and a CH$_4$ gas generation amount was significantly increased.

**Experimental Example 4**

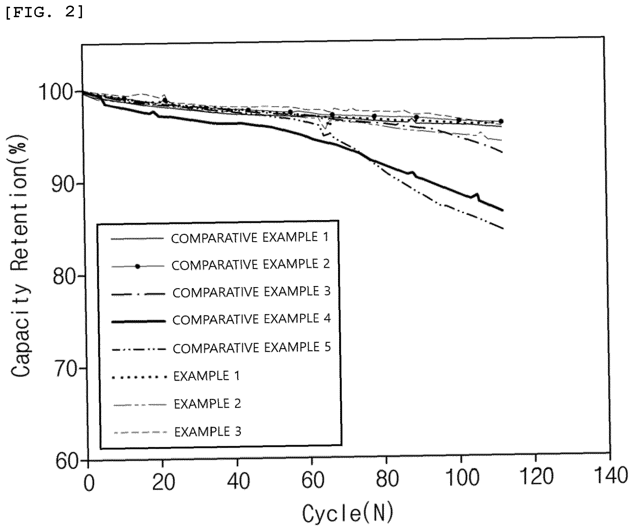

Each of the lithium secondary batteries, which were prepared by injecting the non-aqueous electrolytes of Examples 1 to 3 and Comparative Examples 1 to 5, was charged at 1 C to 4.2 V (0.05 C cut off) under a constant current/constant voltage (CC/CV) condition at 25°C. Subsequently, each lithium secondary battery was discharged at a CC of 1 C to 3 V. The above charging and discharging were set as one cycle, and capacity retention was measured while this cycle was performed 120 times. Measurement results are illustrated in FIG. 2.

Referring to FIG. 2, with respect to the secondary batteries in which the non-aqueous electrolytes of Examples 1 to 3 were used, it may be confirmed that life characteristics were at the same level despite a significant reduction in the gas generation amount in comparison to the secondary batteries in which the non-aqueous electrolytes of Comparative Examples 1 to 2 were used. In contrast, it was found that the secondary batteries, in which the non-aqueous electrolytes of Comparative Examples 3 to 5 were used, had degraded life characteristics in comparison to the secondary batteries of Examples 1 to 3 and Comparative Examples 1 and 2.

**Claims**

1. Anon-aqueous electrolyte comprising an organic solvent containing ethylene carbonate,a non-solvent, and a lithium salt,

   wherein a degree of freedom A of the ethylene carbonate, which is represented by Equation (1), is 30% or less.

   $$\text{Equation (1): } A = \{P_{free-EC}/(P_{free-EC} + P_{Coordination-EC})\} \times 100$$

   wherein, in Equation (1), A is the degree of freedom of the ethylene carbonate, $P_{free-EC}$ is an integrated area of a graph which is obtained by deconvolution of a Raman spectrum of the electrolyte with a Gaussian function based on a peak at 893 cm$^{-1}$, and $P_{Coordination-EC}$ is an integrated area of a graph which is obtained by deconvolution of the Raman spectrum of the electrolyte with a Gaussian function based on a peak at 903 cm$^{-1}$.

2. The non-aqueous electrolyte of claim 1, wherein the degree of freedom A of the ethylene carbonate, which is represented by Equation (1), is in a range of 20% to 30%.

3. The non-aqueous electrolyte of claim 1,wherein a ratio of a volume of the non-solvent to a volume of the ethylene carbonate is in a range of 1 to 6.

4. The non-aqueous electrolyte of claim 1, wherein the ethylene carbonate is included in an amount of 1 vol% to 10 vol% based on a total volume of the non-aqueous electrolyte.

5. The non-aqueous electrolyte of claim 1, wherein the non-solvent is included in an amount of 10 vol% to 40 vol% based on a total volume of the non-aqueous electrolyte.

6. The non-aqueous electrolyte of claim 1, wherein the non-solvent is at least one selected from the group consisting of fluorobenzene, difluorobenzene, hexafluorobenzene, 1,1,2,2-tetrafluoroethyl-2,2,3,3-tetrafluoropropyl ether (HFE), and bis(2,2,2-trifluoroethyl)ether (BTFE).

7. The non-aqueous electrolyte of claim 1, wherein the lithium salt is included in a concentration of 1.3 M to 2 M.

8. The non-aqueous electrolyte of claim 1, wherein the organic solvent further comprises a linear carbonate solvent.

9. The non-aqueous electrolyte of claim 8, wherein the linear carbonate solvent is included in an amount of 50 vol% to 85 vol% based on a total volume of the non-aqueous electrolyte.

10. A lithium secondary battery comprising the non-aqueous electrolyte of any one of claims 1 to 9.

[FIG. 1]

[FIG. 2]

## INTERNATIONAL SEARCH REPORT

| International application No. |
| --- |
| **PCT/KR2023/004266** |

| A. | CLASSIFICATION OF SUBJECT MATTER |
| --- | --- |
| | **H01M 10/0569**(2010.01)i; **H01M 10/052**(2010.01)i |

According to International Patent Classification (IPC) or to both national classification and IPC

| B. | FIELDS SEARCHED |
| --- | --- |

Minimum documentation searched (classification system followed by classification symbols)

H01M 10/0569(2010.01); H01M 10/052(2010.01); H01M 10/0525(2010.01); H01M 10/0567(2010.01);
H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비수전해질(nonaqueous electrolyte), 에틸렌 카보네이트(ethylene carbonate), 유기용매(organic solvent), 비용매(non-solvent), 리튬염(lithium salt)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2005-0040974 A (SAMSUNG SDI CO., LTD.) 04 May 2005 (2005-05-04)<br>See claims 1 and 7-8. | 1-10 |
| A | KR 10-2015-0093057 A (SAMSUNG SDI CO., LTD.) 17 August 2015 (2015-08-17)<br>See claims 1-5; and paragraphs [0032]-[0039]. | 1-10 |
| A | KR 10-0864318 B1 (CHEIL INDUSTRIES INC.) 20 October 2008 (2008-10-20)<br>See claims 1-3 and 8-10. | 1-10 |
| A | KR 10-2020-0036789 A (LG CHEM, LTD.) 07 April 2020 (2020-04-07)<br>See claims 1-5 and 9-12. | 1-10 |
| A | KR 10-2255538 B1 (LG ENERGY SOLUTION, LTD.) 25 May 2021 (2021-05-25)<br>See claims 1 and 6-7. | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 July 2023** | **12 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/004266**

| Patent document cited in search report | | | Publication date (day/month/year) | Patent family member(s) | | | Publication date (day/month/year) |
|---|---|---|---|---|---|---|---|
| KR | 10-2005-0040974 | A | 04 May 2005 | CN | 100612383 | A | 04 May 2005 |
| | | | | CN | 100612383 | B | 16 June 2010 |
| | | | | EP | 1528617 | A2 | 04 May 2005 |
| | | | | EP | 1528617 | A3 | 04 October 2006 |
| | | | | EP | 1528617 | B1 | 09 July 2008 |
| | | | | JP | 2005-135895 | A | 26 May 2005 |
| | | | | JP | 4012174 | B2 | 21 November 2007 |
| | | | | KR | 10-0603303 | B1 | 20 July 2006 |
| | | | | US | 2005-0095507 | A1 | 05 May 2005 |
| | | | | US | 7078132 | B2 | 18 July 2006 |
| KR | 10-2015-0093057 | A | 17 August 2015 | None | | | |
| KR | 10-0864318 | B1 | 20 October 2008 | KR | 10-0796660 | B1 | 22 January 2008 |
| | | | | KR | 10-2008-0004020 | A | 09 January 2008 |
| | | | | KR | 10-2008-0057666 | A | 25 June 2008 |
| KR | 10-2020-0036789 | A | 07 April 2020 | CN | 111684643 | A | 18 September 2020 |
| | | | | EP | 3734738 | A1 | 04 November 2020 |
| | | | | EP | 3734738 | A4 | 03 March 2021 |
| | | | | JP | 2021-513188 | A | 20 May 2021 |
| | | | | JP | 2022-082673 | A | 02 June 2022 |
| | | | | JP | 7055884 | B2 | 18 April 2022 |
| | | | | KR | 10-2411731 | B1 | 22 June 2022 |
| | | | | US | 2021-0057780 | A1 | 25 February 2021 |
| | | | | WO | 2020-067779 | A1 | 02 April 2020 |
| KR | 10-2255538 | B1 | 25 May 2021 | CN | 110998954 | A | 10 April 2020 |
| | | | | EP | 3648229 | A1 | 06 May 2020 |
| | | | | EP | 3648229 | A4 | 03 June 2020 |
| | | | | EP | 3648229 | B1 | 10 August 2022 |
| | | | | KR | 10-2019-0062228 | A | 05 June 2019 |
| | | | | US | 2020-0168950 | A1 | 28 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220039950